# EUROPEAN PATENT SPECIFICATION

(11) **EP 1 979 859 B1**
(45) Date of publication and mention of the grant of the patent: **10.10.2012**
(21) Application number: 06705558.2
(22) Date of filing: 25.01.2006
(51) Int. Cl.: G06K 19/077, G06K 13/077

(54) **APPARATUS AND PROCESS FOR PRODUCING DOCUMENT CORE INLAYS**
VORRICHTUNG UND PROZESS ZUM PRODUZIEREN VON DOKUMENT-KERN-INLAYS
APPAREIL ET PROCESSUS DE PRODUCTION D'INCRUSTATIONS CENTRALE DE DOCUMENT

(43) Date of publication of application: 15.10.2008
(73) Proprietor: Smartrac IP B.V., 1077 XX Amsterdam (NL)
(72) Inventor: LEE, Chi Keung, Hong Kong (CN)
(74) Representative: Böck, Bernhard
(86) International application number: PCT/CN2006/000137
(87) International publication number: WO 2007/085115

(56) References cited:
- CN-A- 1 373 880
- CN-A- 1 416 555
- DE-A1- 19 641 892
- US-A- 5 332 889
- US-A- 5 962 832
- US-A1- 2004 011 865
- US-B1- 6 283 368

## Description

### FIELD OF THE INVENTION

The present invention relates to technologies for producing document core inlays.

### BACKGROUND OF THE INVENTION

A document may include an integrated circuit embedded or inlaid in a sheet of the document. In an exemplary embodiment, the document may be, for example, a passport, travel document, identification document, or other security document. A travel document core inlay producing apparatus may incorporate a plurality of processing stations, each for executing at least one step in processing a travel document core sheet into the travel document core inlay. A processing station may include a loading station for loading the core sheet, a module placement station for placing an integrated circuit chip module onto the core sheet, a wire embedding station for laying wires onto the core sheet for electrical connection purpose, a spot welding station for welding the wires to establish electrical connections with the chip module, and an unloading station for unloading the produced core inlay.

Conventionally, the various processing stations may be sequentially arranged along a linear rail. A supporting table may support the core sheet during processing as the core sheet moves from one station to another along the rail. The apparatus may include a mechanism and/or step of recycling the supporting table back to the beginning of the rail to process the next core sheet. The size of such a machine may be more bulky than desired.

From the prior art apparatus and processes for programming microcontroller cards are known. For example DE 196 41 892 A1 discloses an apparatus and a process for programming microprocessor cards comprising a card input device, a rotary disc transport device, a programming device, containing a rotary disk device including a multitude of writing devices, a transfer device for transferring microprocessor cards from the rotary disk transport device to the programming device and back and a card output device to output already programmed microprocessor cards from the rotary disk transport device in which the programming device is capable of simultaneous and independent programming of a multitude of microprocessor cards on the programming device's rotary disk device due to the multitude of writing devices.

US 5 332 889 A also concerns an integrated card programming device for programming an integrated circuit card. The integrated circuit card programming device has a base, a card input platform, and a transport. The transport is operably connected to the base and rotatably mounted about a rotational axis. The transport includes a transport arm radially disposed about the rotational axis. A card picker carriage is mounted on the transport arm. The card picker carriage has two picker arms. One or more personalization stations for programming an integrated circuit card are radially disposed about the transport. The personalization stations can program the cards to the French or ISO standards and are rotatable by 180°.

Furthermore document US 2004/011865 discloses the personalisation of intelligent portable objects such as smart cards, performed on a device having a support with, on one of its faces, locations intended to receive the objects to be personalised. Remote from this face, equipment for electrical personalisation of the objects is disposed. A graphical printing station is provided to operate upon objects located on the support, which is moved with respect to the graphical printing station. The electrical personalisation and the graphical printing take place at least in part simultaneously.

### SUMMARY OF THE INVENTION

Therefore, it is an object of the present invention to provide a relatively compact document core inlay producing apparatus and process, or at least provide the public with a useful choice. According to an aspect of the present invention, an apparatus for processing a document core sheet to produce a document core inlay includes a plurality of processing stations, each for executing at least one step in producing said inlay and at least one supporting table for supporting the core sheet and for transporting the core sheet to each processing station for processing, wherein said plurality of processing stations are positioned surrounding a center, such that a closed-loop path is defined, and wherein said supporting table travels along said closed-loop path among said plurality of processing stations, wherein the processing stations comprise a loading station for loading the core sheet, a module placement station for placing one or more of the following onto said core sheet: a module; a chip; and a chip module; a wire embedding station for laying wires onto said core sheet for electrical connection purposes; a welding station for welding the wires to establish electrical connections with one or more of the following: said module; said chip; and said chip module; and an unloading station (109) for unloading the produced core inlay.

According to another aspect of the present invention, a process for processing a document core inlay in a document core sheet includes:
providing a core sheet;
   - sequentially cycling said core sheet to a plurality of processing stations along a closed loop path using at least one support table; and
   - processing said core sheet at each of the processing stations, wherein the processing comprises providing a core inlay for the document core sheet,
wherein sequentially cycling the core sheet comprises:
   - loading an unprocessed core sheet at a loading station
   - cycling the core sheet to a module placement station;
   - cycling said core sheet to a wire embedding station; and
   - cycling said core sheet to a spot welding station;
   - unloading the produced document core inlay at an unloading station.

Other aspects and advantages of the invention will become apparent from the following detailed description, taken in conjunction with the accompanying drawings, which description illustrates by way of example the principles of the invention. Other features which are also considered as characteristic for the invention are set forth in the appended claims.

### BRIEF DESCRIPTION OF THE DRAWINGS

Figure 1 illustrates a simplified top plan view of an exemplary embodiment travel document core inlay producing apparatus;
Figure 2 illustrates an exemplary process of operation for an exemplary embodiment of a core inlay producing apparatus;
Figure 3 illustrates an exemplary embodiment of a loading station;
Figure 4a illustrates a simplified top plan view of an exemplary embodiment of the turntable of the apparatus of Figure 1;
Figure 4b illustrates a cross sectional view of an exemplary embodiment of the turntable of Figure 4a, along line A-A';
Figure 5 illustrates a simplified top plan view of an exemplary embodiment of a document core Inlay producing apparatus; and
Figure 6 illustrates a simplified top plan view of an exemplary embodiment of a 30 document core inlay producing apparatus.

### DETAILED DESCRIPTION OF THE PREFERRED EMBODIMENTS

In the following detailed description and in the several figures of the drawing, like elements are identified with like reference numerals.

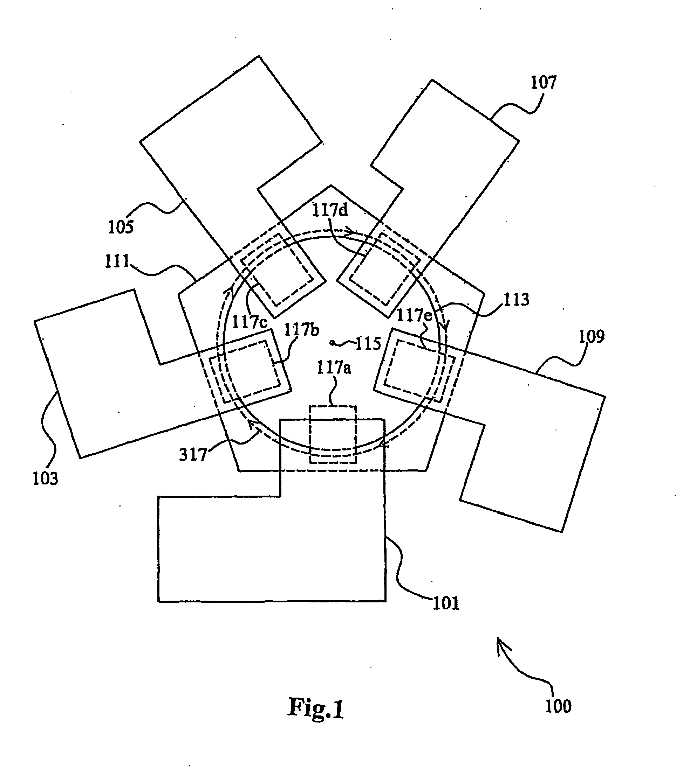

Figure 1 illustrates an exemplary embodiment of a document core inlay producing apparatus 100. The core inlay producing apparatus 100 may include a plurality of processing stations, for example, a loading station 101, a module placement station 103, a wire embedding station 105, a spot welding station 107, and an unloading station 109.

In an exemplary embodiment, the processing stations may be integrated into a platform 111 and may be positioned along a circumference of a circular turntable 113. In an exemplary embodiment, the processing stations may be positioned substantially evenly along the circumference. In an exemplary embodiment, the turntable 113 may be rotatable about a center or axis 115.

In an exemplary embodiment, the turntable 113 may have a plurality, for example five, supporting tables 117a-e thereon. In an exemplary embodiment, the supporting tables may be evenly distributed along the circumference. In an exemplary embodiment, the supporting tables may be positioned such that they may be fed into a respective working region of the processing stations simultaneously. In an exemplary embodiment, the path of the support tables 117a-e may define a closed loop path 317 as the turntable is rotated through all of the processing stations 101-109.

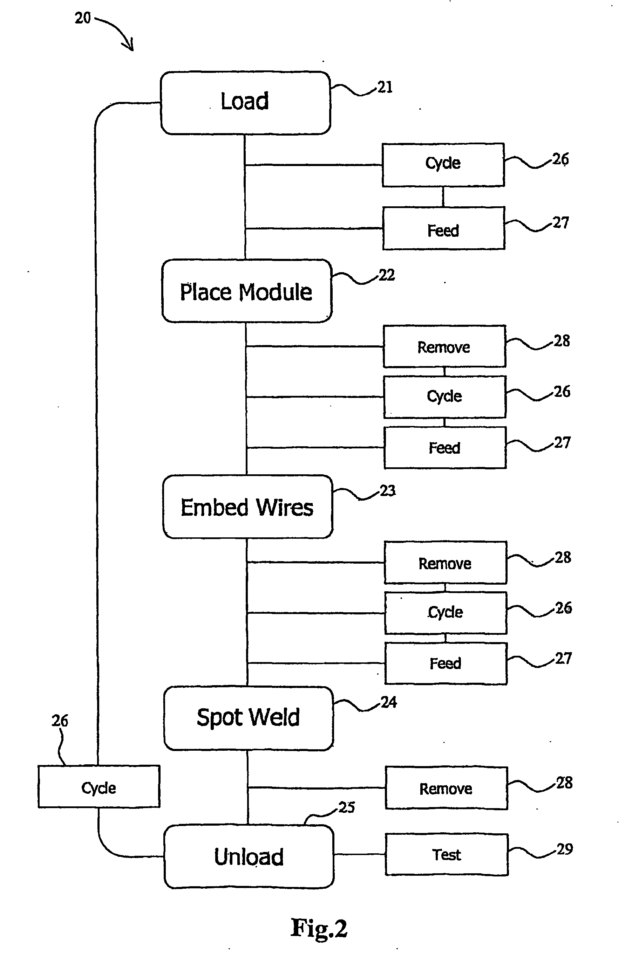

Figure 2 illustrates an exemplary process 20 of producing a core inlay for a document. In an exemplary embodiment, the process 20 may include loading 21 an unprocessed core sheet, placing 22 a module or chip in the core sheet, embedding 23 wires for making an electrical connection to the chip, welding 24, for example spot welding, for attaching the wires to connections on the module or chip, and unloading 25 the chip from the apparatus. In an exemplary embodiment, loading 21 may be done first, placing 22 the module or chip second, embedding 23 wires third, welding 24 fourth and unloading 25 may be performed last.

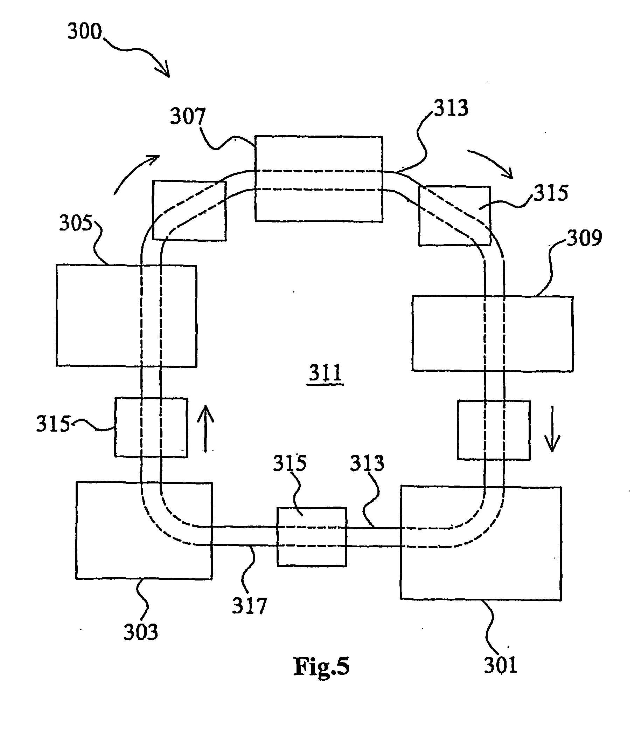

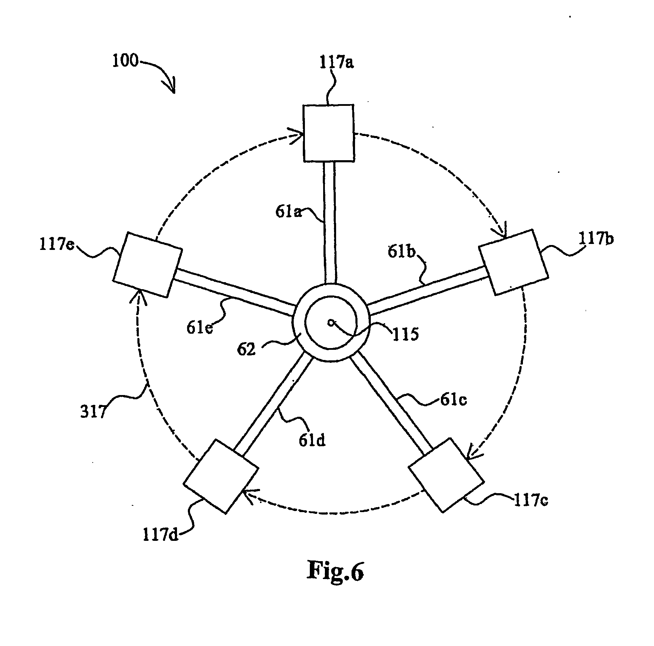

In an exemplary embodiment, the process may include cycling 26 the core sheet from one processing station to the next. In an exemplary embodiment, the core sheet or sheets may be cycled 26 from one processing station to the next by rotating the turntable a sufficient number of degrees for a core sheet or sheets to reach the next processing station. In an exemplary embodiment, with a circular rotation and five evenly spaced processing stations, the core sheets may be cycled 26 to a subsequent processing station by rotating a turntable by 72 degrees. In an exemplary embodiment, as described below with respect to FIGS. 5 and 6, the core sheet may be cycled 26 from one processing station to a subsequent processing station by moving a support table 315 (FIG. 5) on a closed loop rail 313 (FIG. 5) or track or by rotating arms 61 a-e (FIG. 6) holding the supporting tables 117a-e by the desired number of degrees about a center structure or axis.

In an exemplary embodiment, the process may further include feeding the core sheet into a working region of a processing station. For example, when the core sheet has been cycled to a new processing station such as, for example, the module placing station, wire embedding station and/or the spot welding station, the core sheet may then be fed into a working region of the respective processing station.

In an exemplary embodiment, the process may include removing the core sheet from the working region of the respective processing station after the respective processing has been performed and prior to cycling the core sheet to a subsequent processing station.

### Loading Station

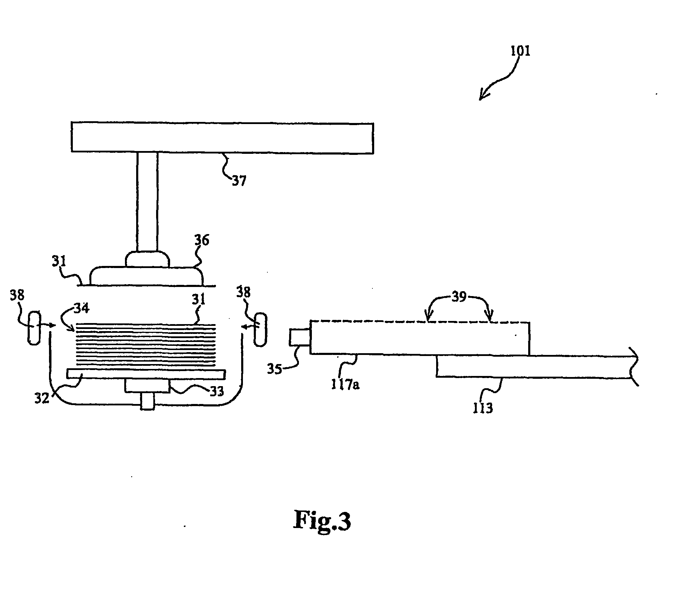

FIG. 3 illustrates an exemplary embodiment of a loading station 101. In an exemplary embodiment, an unprocessed core sheet 31 may be loaded from an input tray 32 of the loading station 101 onto supporting table 117a. In an exemplary embodiment, a loading station 101 may have a lift table 33 for raising a core sheet stack 34 in its input tray 32 to a level approximately the same as the supporting table 117a, as determined by a photo sensor 35 mounted thereon. In an exemplary embodiment, a suction mechanism 36 may suck up the top core sheet by vacuum, and a transfer unit 37 may subsequently feed the picked core sheet onto the respective supporting table 117a on the turntable 113. In an exemplary embodiment, air 38 may be blown from the sides of the lift table to ensure appropriate paper separation.

### Module Placing Station

In an exemplary embodiment, as the turntable 113 may cycle 26 (FIG. 2) or rotate into position, an unprocessed core sheet may be fed 27 (FIG. 2) into a working region of the module placement station 103, where an integrated circuit chip module (not shown) may be mounted onto the core sheet (now shown). In an exemplary embodiment with five stations, for example, the turntable 113 may rotate by 72 degrees.

### Wire Embedding Station

In an exemplary embodiment, the core sheet may then be fed 27 to the wire embedding station 105 by cycling 26 or rotating the turntable 113, for example by 72 degrees, such that the wire embedding station 105 may lay wires (not shown) onto the core sheet for providing a electrical connection to the module or chip.

### Spot Welding-Station

In an exemplary embodiment, the core sheet may then be removed 28 and cycled 26 or rotated to a spot welding station 107. In an exemplary embodiment, the wires may be welded to establish electrical connections with the chip module by the spot welding station 107. In an exemplary embodiment, at this stage of an exemplary process, the core sheet may have been produced into a finished core inlay.

### Unloading Station

In an exemplary embodiment, the turntable 113 may then by cycled 26 or rotated an appropriate number of degrees, for example by 72 degrees, to feed the produced core inlay into the unloading station 109, which may then unload the produced core inlay and may empty the supporting table. In an exemplary embodiment, the emptied supporting table may then be cycled 26 or rotated to the loading station 101 to start a new production cycle 20.

In the exemplary embodiment, a testing 29 function may be integrated into the unloading station.

In an exemplary embodiment, a core inlay producing apparatus may be arranged in a relative compact structure by arranging the processing stations around a center. In an exemplary embodiment, a core inlay producing apparatus may define a closed-loop path connecting the processing stations. In an exemplary embodiment, a closed-loop path apparatus may facilitate feeding a supporting table 117d in the unloading station 109 to the loading station 101 for a subsequent next cycle.

In an exemplary embodiment, providing a core inlay producing apparatus with a plurality of supporting tables 117a-e, may facilitate processing a plurality of core sheets simultaneously. For example, in an exemplary embodiment with five supporting tables 117a-3, as shown in FIG. 1, it may be possible to process up to five core sheets simultaneously.

In an exemplary embodiment, each of the separate processing stations may have an independent security system. In an exemplary embodiment, providing processing stations with independent security systems may permit each processing station to be controlled separately.

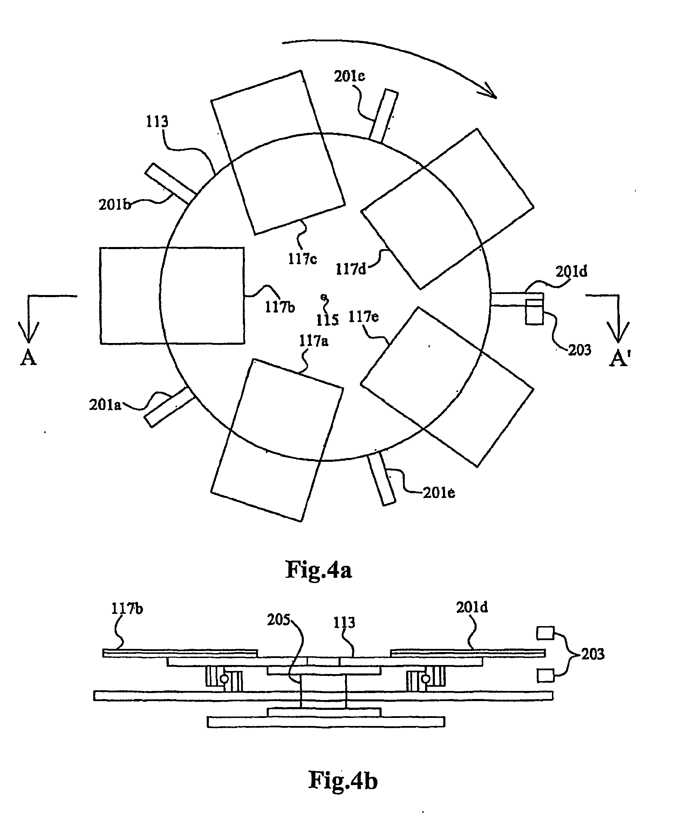

In an exemplary embodiment, a turntable 113, for example as shown in Figures 4a and 4b, may be rotatably mounted to a pivot or column 205 at its center 115. In an exemplary embodiment, a turntable may have a plurality of blocks 201 a-e. In an exemplary embodiment, the blocks 201a-e may work together with a laser micrometer 203 mounted on the integrated platform 111 (FIG. 1) for positioning the turntable 113.

In an exemplary embodiment, a supporting table, for example each supporting table, may have vacuum holes 39 (FIG. 3) thereon for flatting the core sheet thereon and for maintaining the core sheet in contact with the supporting such that during the processing, the core sheet remains on the supporting table without being lifted. In an exemplary embodiment, the vacuum holes may facilitate or assist in achieving a desired production quality by reducing the possibility of inadvertent movement of the core sheet.

Figure 5 illustrates an exemplary embodiment of a processing apparatus 300. In an exemplary embodiment, the apparatus 300 may include a plurality of processing stations 301, 303, 305, 307, 309. In an exemplary embodiment, the processing stations may perform functions similar to those processing stations shown and described with respect to Figures 1-3. In an exemplary embodiment, the processing stations may be positioned about the center 311 such that the closed-loop path 317 connecting the processing stations 301-309 exhibits an irregular shape.

In an exemplary embodiment, the processing stations may be connected by a rail 313, which defines the closed-loop path 317. In an exemplary embodiment, the supporting table(s) 315 may be driven along the rail 313 among the processing stations 301-309 by, for example, gear and gear track (both not shown) each mounted on one of the rail and the supporting table, belt, and so on, as could be understood in the art.

Various alternate embodiments to the above-described embodiments may also be made.

For example, referring to Figure 3, the loading station 101 may use a positioning unit (not shown) before the supporting table 117a to ensure that the core sheet is well positioned. After the core sheet is loaded onto a platform (not shown) of the positioning unit, for example, by the transfer unit 37, a pair of moving plates (not shown) on the positioning unit push the two tailing edges of the core sheet towards a pair of fixed edges or stoppers (not shown) on the supporting table until the two leading edges of the top sheet have reached the fixed edges so that a repeatable positioning for core sheets on the supporting tables can be achieved. Air may be blown from the bottom of the positioning unit to reduce the friction between the core sheet being fed and the platform of the positioning unit.

FIG. 6 illustrates an exemplary embodiment of a document core inlay producing apparatus 100. In an exemplary embodiment, the apparatus 100 may include a plurality of support tables 117a-117e for supporting a core sheet during processing. In an exemplary embodiment, the support tables 117a-117e may be mounted or attached on arms 61a-61e. In an exemplary embodiment, the arms 61a-61e may be mounted on a center structure 62. In an exemplary embodiment, the center structure 62 may be rotatable about an axis 115. In an exemplary embodiment, the arms 61a-61e may be mounted such that they may be rotated around the axis 115. In an exemplary embodiment, as the arms are rotated about the axis 115, the movements of the support tables 117a-e define a closed loop path 317. In an exemplary embodiment, the arms 61a-e may each have one end connected to a supporting table 117a-117e and the other end rotatably connected at the center 62 and driven by a rotation motor (not shown), which may be used to rotate the supporting tables among the processing stations 101-109 (FIG. 1). In an exemplary embodiment, the supporting tables 117a-e may be cycled 26 through successive processing stations as described above with respect to FIG. 2.

## Claims

1. An apparatus (100) configured to process a document core sheet for producing a document core inlay, comprising:
- a plurality of processing stations, each for executing at least one step in producing said inlay; and
- at least one supporting table (315) for supporting the core sheet and for transporting the core sheet to each processing station for processing, wherein said plurality of processing stations are positioned surrounding a center, such that a closed-loop path (317) is defined, and wherein said supporting table (315) travels along said closed-loop path (317) among said plurality of processing stations, **characterised in that** the processing stations comprise
- a loading station (101) for loading the core sheet;
- a module placement (103) station for placing one or more of the following onto said core sheet:
- a module;
- a chip; and
- a chip module;
- a wire embedding station (105) for laying wires onto said core sheet for electrical connection purpose;
- a welding station (107) for welding the wires to establish electrical connections with one or more of the following:
- said module;
- said chip; and
- said chip module; and
- an unloading station (109) for unloading the produced core inlay.

2. The apparatus according to claim 1, wherein the unloading station (109) also functions as a testing station.

3. The apparatus according to claim 1, wherein the processing stations are sequentially positioned, with the unloading station (109) adjacent to the (101) loading station.

4. The apparatus according to claim 1, wherein the loading station (101) comprises a lift table for raising an unprocessed core sheet (31) to a level at least substantially the same as the supporting table (315).

5. The apparatus according to claim 1, wherein the processing stations are integrated into one single platform (111).

6. The apparatus according to claim 5, further comprising a turntable (113) rotatable about the center (115) and being integrated into the platform (111), the at least one supporting table (315) is positioned on said turntable (113) such that rotation of said turntable (113) transports said at least one supporting table (315) among the processing stations.

7. The apparatus according to claim 1, wherein at least one of the processing stations comprises an independent security check mechanism.

8. The apparatus according to claim 1, wherein the loading station (101) comprises a positioning unit that receives the core sheet before it is loaded onto the supporting table (315), and wherein said positioning unit has a pair of moving plates thereon to push the tailing edge of said core sheet towards said supporting table (315) in the working region of said loading station (101).

9. The apparatus according to claim 8, wherein the positioning unit further comprises air holes, through which air can be blown to reduce the friction between the core sheet being fed and the positioning unit.

10. A process (20) of processing a document core inlay in a document core sheet, comprising:
- providing a core sheet;
- sequentially cycling (26) said core sheet to a plurality of processing stations along a closed loop path using at least one support table (315); and
- processing said core sheet at each of the processing stations,
wherein the processing comprises providing a core inlay for the document core sheet,
**characterised in that** sequentially cycling the core sheet comprises:
- loading (21) an unprocessed core sheet (31) from a loading station (101)
- cycling (26) the core sheet to a module placement station;
- cycling (26) said core sheet to a wire embedding station; and
- cycling (26) said core sheet to a spot welding station;
- unloading (25) the produced document core inlay at an unloading station (109).

11. The process (20) according to claim 10, wherein processing the core sheet comprises:
- placing one or more of the following in the sheet:
- a module;
- a chip; and
- a chip module;
- embedding wires in said sheet; and
- spot welding the wires to make electrical connection with one or more of the following:
- said module;
- said chip; and
- said chip module.

## Patentansprüche

1. Einrichtung (100), die ausgelegt ist, eine Dokumenten-Kernfolie zur Herstellung eines Dokumenten-Kerninlays zu bearbeiten, umfassend:
- mehrere Bearbeitungsstationen, die jeweils zumindest einen Schritt bei der Herstellung des Inlays ausführen; und
- zumindest einen Auflagetisch (315) zur Auflage der Kernfolie und zum Transport der Kernfolie zu jeder Bearbeitungsstation zur dortigen Bearbeitung, wobei die mehreren Bearbeitungsstationen um eine Mitte angeordnet sind, so dass ein geschlossener Kreislauf (317) definiert ist, und wobei der Auflagetisch (315) entlang des geschlossenen Kreislaufes (317) zwischen den mehreren Bearbeitungsstationen wandert,
**dadurch gekennzeichnet, dass** die Bearbeitungsstationen Folgendes umfassen:
- eine Ladestation (101) zur Aufnahme der Kernfolie,
- eine Modulplatzierungsstation (103) zur Platzierung eines oder mehrerer der folgenden Bauteile auf der Kernfolie:
ein Modul, einen Chip und ein Chipmodul,
- eine Drahtverlegestation (105) zum Verlegen von Drähten auf der Kernfolie zur elektrischen Verbindung,
- eine Schweißstation (107) zum Anschweißen der Drähte zur Herstellung elektrischer Verbindungen mit einem oder mehreren der folgenden Bauteile:
dem Modul, dem Chip, und dem Chipmodul, und
- eine Entladestation (109) zur Ausgabe des hergestellten Kerninlays.

2. Einrichtung nach Anspruch 1, wobei die Entladestation (109) auch als Teststation fungiert.

3. Einrichtung nach Anspruch 1, wobei die Bearbeitungsstationen aufeinanderfolgend angeordnet sind, wobei die Entladestation (109) neben der Ladestation (101) angeordnet ist.

4. Einrichtung nach Anspruch 1, wobei die Ladestation (101) einen Hebetisch zum Anheben einer unbearbeiteten Kernfolie (31) auf eine Höhe, die im Wesentlichen der Höhe des Auflagetisches (315) entspricht, umfasst.

5. Einrichtung nach Anspruch 1, wobei die Bearbeitungsstationen in einer einzigen Plattform (111) integriert sind.

6. Einrichtung nach Anspruch 5, ferner umfassend einen Drehtisch (113), der um die Mitte (115) drehbar ist und der in die Plattform (111) integriert ist, wobei der zumindest eine Auflagetisch (315) so auf dem Drehtisch (113) positioniert ist, dass durch die Drehung des Drehtisches (113) der zumindest eine Auflagetisch (315) zwischen den Bearbeitungsstationen transportiert wird.

7. Einrichtung nach Anspruch 1, wobei zumindest eine der Bearbeitungsstationen einen gesonderten Sicherheitsprüfungsmechanismus umfasst.

8. Einrichtung nach Anspruch 1, wobei die Ladestation (101) eine Positioniereinheit umfasst, die die Kernfolie aufnimmt, bevor diese auf den Auflagetisch (315) geladen wird, und wobei die Positioniereinheit ein Paar bewegliche Platten aufweist, um den abstehenden Rand der Kernfolie in Richtung des Auflagetisches (315) in dem Bearbeitungsbereich der Ladestation (101) zu schieben.

9. Einrichtung nach Anspruch 8, wobei die Positioniereinheit ferner Luftlöcher umfasst, durch die Luft eingeblasen werden kann, um die Reibung zwischen der zugeführten Kernfolie und der Positioniereinheit zu reduzieren.

10. Verfahren (20) zur Bearbeitung eines Dokumenten-Kerninlays in einer Dokumenten-Kernfolie, umfassend:
- Bereitstellen einer Kernfolie;
- sequenzieller Durchlauf (26) der Kernfolie durch mehrere Bearbeitungsstationen in einem geschlossenen Kreislauf unter Einsatz zumindest eines Auflagetisches (315), und
- Bearbeiten der Kernfolie in jeder Bearbeitungsstation, wobei die Bearbeitung die Bereitstellung eines Kerninlays für die Dokumenten-Kernfolie umfasst,
**dadurch gekennzeichnet, dass** der sequenzielle Durchlauf der Kernfolie Folgendes umfasst:
- Laden (21) einer unbearbeiteten Kernfolie (31) durch eine Ladestation (101),
- Durchlauf (26) der Kernfolie hin zu einer Modulplatzierungsstation,
- Durchlauf (26) der Kernfolie hin zu einer Drahtverlegestation; und
- Durchlauf (26) der Kernfolie hin zu einer Punktschweißstation,
- Entladen (25) des hergestellten Dokumenten-Kerninlays an einer Entladestation (109).

11. Verfahren (20) nach Anspruch 10, wobei die Bearbeitung der Kernfolie Folgendes umfasst:
- Platzieren eines oder mehrerer der folgenden Bauteile in der Folie:
ein Modul, einen Chip; und ein Chipmodul,
- Verlegen der Drähte in der Folie, und
- Punktschweißen der Drähte zur Herstellung einer elektrischen Verbindung mit einem oder mehreren der folgenden Bauteile:
dem Modul, dem Chip, und dem Chipmodul.

## Revendications

1. Dispositif (100) configuré pour le traitement d'une feuille d'âme pour un document pour la fabrication d'un insert d'âme pour un document, comprenant:
- plusieurs stations de traitement, chacune exécutant au moins une étape dans la fabrication dudit insert, et
- au moins une table d'appui (315) pour recevoir la feuille d'âme et pour transporter la feuille d'âme à chaque station de traitement aux fins de traitement, lesdites plusieurs stations de traitement étant disposées entourant une partie centrale, de telle manière qu'un trajet circulaire fermé (317) est défini, et la table d'appui (315) se déplaçant entre ledit trajet circulaire fermé (317) et les plusieurs stations de traitement,
**caractérisé en ce que** les stations de traitement comprenant:
- une station de chargement (101) pour charger la feuille d'âme,
- une station de placement du module (103) pour placer un ou plusieurs des composants suivants sur la feuille d'âme:
un module, une puce et un module de puce,
- une station de pose de fils (105) pour poser des fils sur la feuille d'âme aux fins de créer une connexion électrique,
- une station de soudage (107) pour souder les fils afin de créer des connexions électriques avec un ou plusieurs des composants suivants:
le module, la puce, et le module de puce, et
- une station de déchargement (109) pour décharger l'insert d'âme fabriqué.

2. Dispositif selon la revendication 1, dans lequel la station de déchargement (109) fonctionne également comme station d'essais.

3. Dispositif selon la revendication 1, dans lequel les stations de traitement sont disposées séquentiellement, la station de déchargement (109) étant disposée adjacente à la station de chargement (101).

4. Dispositif selon la revendication 1, dans lequel la station de chargement (101) comprend une table élévatrice pour soulever une feuille d'âme (31) non traitée à une hauteur correspondant au moins essentiellement à la hauteur de la table d'appui (315).

5. Dispositif selon la revendication 1, dans lequel les stations de traitement sont intégrées dans une seule plate-forme (111).

6. Dispositif selon la revendication 5, en outre comprenant une table tournante (113) pouvant tourner autour de la partie centrale (115) et étant intégrée dans la plate-forme (111), ladite au moins une table d'appui (315) étant positionnée sur la table tournante (113) de manière que ladite au moins une table d'appui (315) est déplacée entre les stations de traitement par la rotation de la table tournante (113).

7. Dispositif selon la revendication 1, dans lequel au moins une parmi les stations de traitement comprend un mécanisme de vérification de sécurité séparé.

8. Dispositif selon la revendication 1, dans lequel la station de chargement (101) comprend une unité de positionnement pour recevoir la feuille d'âme avant que celle-ci soit placée sur la table d'appui (315), et dans lequel l'unité de positionnement a une paire de plaques mobiles sur soi-même pour pousser le bord en saillie de la feuille d'âme vers la table d'appui (315) dans la zone de traitement de la station de chargement (101).

9. Dispositif selon la revendication 8, dans lequel l'unité de positionnement en outre comprend des trous d'aération à travers lesquels l'air peut être aspiré afin de réduire le frottement entre la feuille d'âme qui est en train d'être alimentée et l'unité de positionnement.

10. Procédé (20) pour le traitement d'un insert d'âme pour un document dans une feuille d'âme pour un document, comprenant les étapes suivantes:
- la mise à la disposition d'une feuille d'âme,
- le passage séquentiel (26) de la feuille d'âme à travers plusieurs stations de traitement le long d'un trajet circulaire fermé en utilisant au moins une table d'appui (315), et
- le traitement de la feuille d'âme dans chaque station de traitement, le traitement comprenant la mise à la disposition d'un insert d'âme pour la feuille d'âme pour un document,
**caractérisé en ce que** le passage séquentiel de la feuille d'âme comprend le suivant:
- le chargement (21) d'une feuille d'âme (31) non traitée à l'aide d'une station de chargement (101),
- le passage (26) de la feuille d'âme jusqu'à une station de placement d'un module,
- le passage (26) de la feuille d'âme jusqu'à une station de pose de fils,
- le passage (26) de la feuille d'âme jusqu'à une station de soudage par points, et
- le déchargement (25) de l'insert d'âme pour un document fabriqué à une station de déchargement (109).

11. Procédé (20) selon la revendication 10, dans lequel le traitement de la feuille d'âme comprend le suivant:
- le placement d'un ou plusieurs des composants suivants dans la feuille:
un module, une puce, et un module de puce,
- la pose des fils dans la feuille, et
- le soudage par points des fils pour la création d'une connexion électrique avec un ou plusieurs des composants suivants:
le module, la puce, et le module de puce.
